# EUROPÄISCHE PATENTSCHRIFT

(11) **EP 1 854 649 B1**
(45) Veröffentlichungstag und Bekanntmachung des Hinweises auf die Patenterteilung: **19.10.2011**
(21) Anmeldenummer: 07009286.1
(22) Anmeldetag: 09.05.2007
(51) Int. Cl.: B60J 7/02

(54) **Kraftfahrzeugkarosserie für ein Kraftfahrzeug**
Car body for a motor vehicle
Carrosserie de véhicule automobile

(30) Priorität: 11.05.2006 DE 102006021881
(43) Veröffentlichungstag der Anmeldung: 14.11.2007
(73) Patentinhaber: GM Global Technology Operations LLC, Detroit, MI 48265-3000 (US)
(72) Erfinder: Krug, Ralf, 65428 Rüsselheim (DE)
(74) Vertreter: Daniel, Ulrich W.P.

(56) Entgegenhaltungen:
- EP-A2- 0 697 299
- EP-A2- 1 088 746
- WO-A-2007/033747
- DE-U1- 8 816 505
- FR-A1- 2 701 677

## Beschreibung

Die Erfindung betrifft eine Kraftfahrzeügkarosserie für ein Kraftfahrzeug mit einem sich in Fahrzeuglängsrichtung erstreckenden, seitlichen Karosserieteil des Kraftfahrzeuges und mit einem von dem seitlichen Karosserieteilen abstehenden, zur Anbindung eines Verstärkungsteils eines Daches vorgesehenem Flansch, mit einem sich seitlich in Fahrtrichtung erstreckenden Dachkanal, mit einem das seitliche Karosserieteil überdeckenden Außenblech und mit einem Außenblech des Daches, wobei die Außenbleche bis in den Dachkanal geführt sind und sich an einem Boden des Dachkanals auf dem Flansch des seitlichen Karosserieteils abstützen, und mit einem Rahmen für ein Schiebedach des Kraftfahrzeuges, sowie den weiteren Merkmalen des Oberbegriffs des Anspruches 1.

Der Rahmen des Schiebedaches ist bei der aus der Praxis bekannten Kraftfahrzeugkarosserie bis in zwei Dachkanäle geführt und beispielsweise mittels einer Punktschweißung mit den Außenblechen zweier seitlicher Karosserieteile und den Außenblechen des Daches verschweißt. Die Dachkanäle stützen sich zudem auf den Flanschen der seitlichen Karosserieteile ab. Dies führt jedoch zu einem aufwändigen Rohbau der Kraftfahrzeugkarosserie. Bei einem als geschlossenes Volldach ausgebildeten Dach ohne Schiebedach wird jedoch ein Verstärkungsteil des Daches auf den Flanschen der seitlichen Karosserieteile montiert. Damit entstehen unterschiedliche Montageabläufe bei unterschiedlichen Dächern.

Weiterhin ist aus der DE 88 16 505 U1 ein Schiebedach bekannt geworden, welches über einen Einschraubrahmen an einem mit der Karosserie und einem Außenblech des Daches verbundenen Einschweißrahmen befestigt ist. Diese Gestaltung erfordert eine große Anzahl an aufwändigen Bauteilen und eine aufwändige Montage.

Da der Rahmen für das Schiebedach an dem Flansch des seitlichen Karosserieteils befestigt ist und von dem Dachkanal beabstandet ist, wobei das Außenblech des Daches eine Ausnehmung für das Schiebedach hat, wird erreicht, dass sich an dem Flansch des seitlichen Karosserieteils wahlweise das Verstärkungsteil des Daches ohne Schiebedach oder der Rahmen für das das Schiebedach aufweisende Dach beispielsweise durch Punktschweißen oder Laserschweißen befestigen lässt. Die Reihenfolge bei der Montage der Varianten des Daches mit und ohne Schiebedach ist dabei gleich.

Die Montage der Kraftfahrzeugkarosserie ist zudem unabhängig von der Größe oder der Art des vorgesehenen Schiebedaches. Der Rahmen für das Schiebedach kann im Rohbau der Kraftfahrzeugkarosserie mit dem Flansch des seitlichen Karosserieteils verbunden werden und erzeugt dabei eine vorgesehene Stabilität des Rohbaus. Weiterhin ist durch den Abstand des Rahmens des Schiebedachs von dem Dachkanal eine freie Gestaltung hinsichtlich der Größe und der Position des Dachkanals möglich. Die - Kraftfahrzeugkarosserie lässt sich daher besonders einfach für unterschiedliche Varianten des Daches mit und ohne Schiebedach fertigen. Der Rahmen des Schiebedaches ist ein geschlossenes Profilteil.

Zur weiteren Versteifung des Daches im Bereich der Ausnehmung für das Schiebedach trägt es bei, wenn der Rahmen ein bis an den dem Schiebedach zugewandten Bereich des Außenblechs des Daches geführtes Stützelement hat, das ggf. an dem zur Anbindung des Schiebedaches vorgesehenen Flansch des Rahmens befestigt ist.

Ein ein Schiebedach aufweisendes Dach mit den vorgenannten Merkmalen ist in der EP 0 679 299 A1 beschrieben. Die Befestigung des Rahmens an der Karosserie erfolgt zum einen an einem Flansch des seitlichen Karosserieteils und zum anderen mittels des Stützteils an dem dem Schiebedach zugewandten Bereich des Außenbleches des Daches.

Die Erfindung beruht auf der Aufgabe, die Stabilität des das Schiebedach aufweisenden Daches weiter zu erhöhen.

Dazu schlägt die Erfindung vor, dass der Rahmen in einem mittleren Bereich einen bis zu dem Außenblech des Daches geführten Abschnitt aufweist, auf dem das Außenblech des Daches auf dem Abschnitt aufliegt, wobei der bis zu dem Außenblech des Daches geführte Abschnitt zwischen den beiden Flanschen des Rahmens angeordnet ist.

Die Abstützung des Außenbleches des Daches durch den Rahmen gestaltet sich konstruktiv besonders einfach, wenn der bis zu dem Außenblech des Daches geführte Abschnitt des Rahmens eine muldenförmige Vertiefung zur Aufnahme eines das Außenblech des Daches mit dem Rahmen verbindenden Klebstoffwulstes hat.

Zur weiteren Vereinfachung der Abstützung des Außenbleches des Daches trägt es gemäß einer anderen vorteilhaften Weiterbildung der Erfindung bei, wenn das Stützelement eine muldenförmige Vertiefung zur Aufnahme eines das Außenblech des Daches mit dem Stützelement verbindenden Klebstoffwulstes hat.

Zur Vereinfachung der Montage der erfindungsgemäßen Kraftfahrzeugkarosserie trägt es bei, wenn das Stützelement mit dem Rahmen verklebt und verschraubt oder verklebt und verschweißt ist. Hierdurch kann das Stützelement zunächst durch Verklebung an dem Rahmen fixiert und in einem letzten Arbeitsgang mit dem Rahmen verschraubt oder verschweißt werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: einen Teilbereich eines Kraftfahrzeuges mit einem ein Schiebedach aufweisenden Dach,
- Fig. 2: stark vergrößert eine Schnittdarstellung entlang der Linie II - II durch einen Teilbereich des Daches und angrenzenden Bereichen einer Kraftfahrzeugkarosserie des Kraftfahrzeuges aus Figur 1.

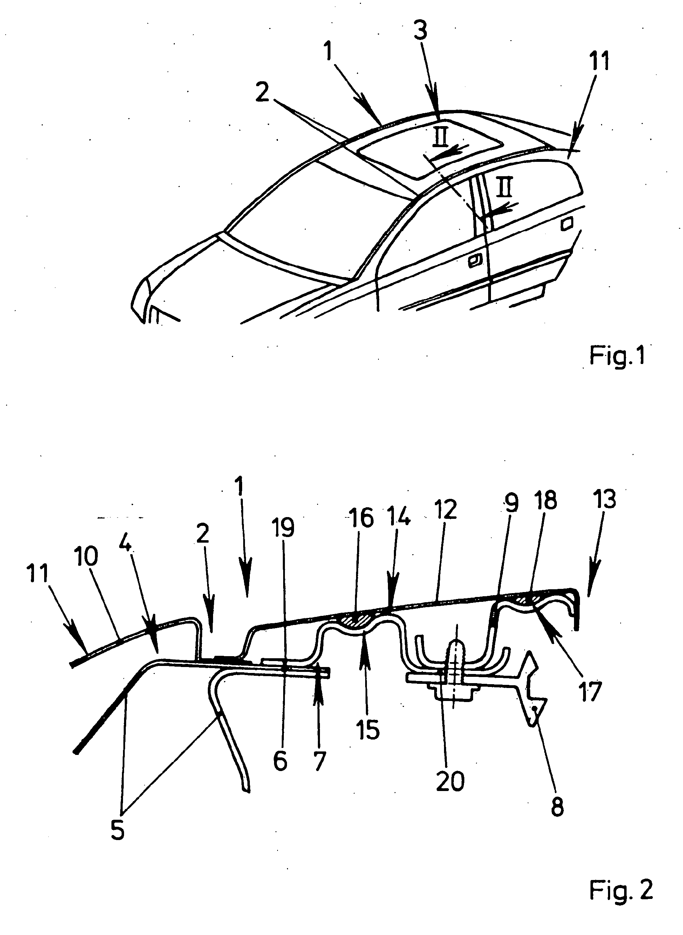

Figur 1 zeigt ein Kraftfahrzeug mit einem Dach 1 und zwei in Fahrtrichtung weisenden Dachkanälen 2. Das Dach 1 hat ein Schiebedach 3. Die Anbindung des Daches 1 an eine Kraftfahrzeugkarosserie 4 ist in einer Schnittdarstellung entlang der Linie II - II in Figur 2 dargestellt.

Figur 2 zeigt, dass die Kraftfahrzeugkarosserie 4 seitliche Karosserieteile 5 einer Seitenwand des Kraftfahrzeuges mit einem abstehenden Flansch 6 aufweist. Auf dem Flansch 6 ist ein Rahmen 7 für das in Figur 1 dargestellte Schiebedach 3 befestigt. Zur Vereinfachung der Zeichnung ist von dem Schiebedach 3 in Figur 2 nur ein Teilbereich eines Führungsteils 8 dargestellt. Weiterhin ist der Rahmen 7 mit einem Stützelement 9 verbunden. Ein Außenblech 10 der Seitenwand 11 und ein Außenblech 12 des Daches 1 sind bis in den Dachkanal 2 geführt und am Boden des Dachkanals 2 miteinander verschweißt. Das Außenblech 12 des Daches 1 weist eine zentrische Ausnehmung 13 für das in Figur 1 dargestellte Schiebedach 3 auf. Die Verbindung des Rahmens 7 mit dem Flansch 6 der Karosserieteile 5 der Seitenwand 11 ist von dem Dachkanal 2 beabstandet. Der Rahmen 7 weist einen mittleren, bis zu dem Außenblech 12 des Daches 1 geführten Abschnitt 14 mit einer muldenförmigen Vertiefung 15 auf. In die muldenförmige Vertiefung 15 ist ein Klebstoffwulst 16 eingebracht, auf dem das Außenblech 12 des Daches 1 aufliegt. Das Stützelement 9 hat ebenfalls eine muldenförmige Vertiefung 17 zur Aufnahme eines das Außenblech 12 des Daches 1 abstützenden Klebstoffwulstes 18. Ein Flansch 19 des Rahmens 7 ist bis zu dem Flansch 6 der Seitenwand 11 geführt, während ein weiterer Flansch 20 des Rahmens 7 das Stützelement 9 und das Führungsteil 8 des Schiebedaches 3 haltert. Das Stützelement 9 ist mit dem dem Schiebedach 3 zugewandten Flansch 20 des Rahmens 7 verklebt und verschraubt.

Wenn das Kraftfahrzeug aus Figur 1 mit einem nicht dargestellten Dach ohne Schiebedach ausgestattet werden soll, wird anstelle des Rahmens 7 ein nicht dargestelltes Verstärkungsteil an dem Flansch 6 der Karosserieteile 5 der Seitenwand 11 montiert und ein ebenfalls nicht dargestelltes geschlossenes Außenblech des Daches in dem Dachkanal befestigt.

### Bezugszeichenliste

- 1: Dach
- 2: Dachkanal
- 3: Schiebedach
- 4: Kraftfahrzeugkarosserie
- 5: Karosserieteil
- 6: Flansch
- 7: Rahmen
- 8: Führungsteil
- 9: Stützelement
- 10: Außenblech
- 11: Seitenwand
- 12: Außenblech
- 13: Ausnehmung
- 14: Abschnitt
- 15: Vertiefung
- 16: Klebstoffwulst
- 17: Vertiefung
- 18: Klebstoffwulst
- 19, 10: Flansch

## Patentansprüche

1. Kraftfahrzeugkarosserie (4) für ein Kraftfahrzeug mit einem sich in Fahrzeuglängsrichtung erstreckenden, seitlichen Karosserieteil (5) des Kraftfahrzeuges und mit einem von dem seitlichen Karosserieteil (5) abstehenden, zur Anbindung eines Verstärkungsteils eines Daches (1) vorgesehenen Flansch (6), mit einem sich seitlich in Fahrtrichtung erstreckenden Dachkanal (2), mit einem das seitliche Karosserieteil (5) überdeckenden Außenblech (10) und mit einem Außenblech (12) des Daches (1), wobei die Außenbleche (10, 12) bis in den Dachkanal (2) geführt sind und sich im Boden des Dachkanals (2) auf dem Flansch (6) des seitlichen Karosserieteils (5) abstützen, und mit einem Rahmen (7) für ein Schiebedach (3) des Kraftfahrzeuges, wobei der Rahmen (7) für das Schiebedach (3) an dem Flansch (6) des seitlichen Karosserieteils (5) befestigt ist und von dem Dachkanal (2) beabstandet ist und wobei das Außenblech (12) des Daches (1) eine Ausnehmung (13) für das Schiebedach (3) hat und wobei der Rahmen (7) einen Flansch (19) zur Anbindung an dem Flansch (6) des seitlichen Karosserieteils (5) aufweist und einen Flansch (20) zur Anbindung des Schiebedaches (3) hat und wobei der Rahmen (7) ein bis an den dem Schiebedach (3) zugewandten Bereich des Außenblechs (12) des Daches (1) geführtes Stützelement (9) hat, **dadurch gekennzeichnet, dass** der Rahmen (7) in einem mittleren Bereich einen bis zu dem Außenblech (12) des Daches (1) geführten Abschnitt (14) aufweist, auf dem das Außenblech (12) des Daches (1) aufliegt, wobei der bis zu dem Außenblech (12) des Daches (1) geführte Abschnitt (14) zwischen den beiden Flanschen (19, 20) des Rahmens (7) angeordnet ist.

2. Kraftfahrzeugkarosserie nach Anspruch 1, **dadurch gekennzeichnet, dass** der bis zu dem Außenblech (12) des Daches (1) geführte Abschnitt (14) des Rahmens (7) eine muldenförmige Vertiefung (15) zur Aufnahme eines das Außenblech (12) des Daches (1) mit dem Rahmen (7) verbindenden Klebstoffwulstes (16) hat.

3. Kraftfahrzeugkarosserie nach Anspruch 1 oder 2, **dadurch gekennzeichnet, dass** das Stützelement (9) an dem zur Anbindung des Schiebedaches (3) vorgesehenen Flansch (20) des Rahmens (7) befestigt ist.

4. Kraftfahrzeugkarosserie nach zumindest einem der vorhergehenden Ansprüche, **dadurch gekennzeichnet, dass** das Stützelement (9) eine muldenförmige Vertiefung (17) zur Aufnahme eines das Außenblech (12) des Daches (1) mit dem Stützelement (9) verbindenden Klebstoffwulstes (18) hat.

5. Kraftfahrzeugkarosserie nach zumindest einem der vorhergehenden Ansprüche, **dadurch gekennzeichnet, dass** das Stützelement (9) mit dem Rahmen (7) verklebt und verschraubt oder verklebt und verschweißt ist.

## Claims

1. A motor vehicle body (4) for a motor vehicle, comprising a lateral body part (5) of the motor vehicle extending in the longitudinal direction of the vehicle and a flange (6) protruding from the lateral body part (5) for connecting a reinforcing part of a roof (1), a roof channel(2) extending laterally in the driving direction, an outside panel (10) covering the lateral body part (5), an outside panel (12) of the roof (1), with the outside panels (10, 12) being guided up into the roof channel (2) and rest in the floor of the roof channel (2) on the flange (6) of the lateral body part (5), and a frame (7) for a sunroof (3) of the motor vehicle, with the frame (7) for the sunroof (3) being fastened to the flange (6) of the lateral body part (5) and being spaced from the roof channel (2), and with the outside panel (12) of the roof (1) having a recess (13) for the sunroof (3) and the frame (7) having a flange (19) for connection to the flange (6) of the lateral body part (5) and a flange (20) for connecting the sunroof (3), and with the frame (7) having a support element (9) which is guided up to the region of the outside panel (12) of the roof (1) facing the sunroof (3), **characterized in that** the frame (7) comprises a section (14) in a middle region which is guided up to the outside panel (12) of the roof (1), with the outside panel (12) of the roof (1) being placed on said section (14), with the section (14) guided up to the outside panel (12) of the roof (1) being arranged between the two flanges (19, 20) of the frame (7).

2. A motor vehicle body according to claim 1, **characterized in that** the section (14) of the frame (7) which is guided up to the outside panel (12) of the roof (1) has a trough-shaped depression (15) for accommodating an adhesive bead (16) connecting the outside panel (12) of the roof (1) with the frame (7).

3. A motor vehicle body according to claim 1 or 2, **characterized in that** the support element (9) is fastened to the flange (20) of the frame (7) provided for connecting the sunroof (3).

4. A motor vehicle body according to at least one of the preceding claims, **characterized in that** the support element (9) has a trough-shaped depression (17) for accommodating an adhesive bead (18) connecting the outside panel (12) of the roof (1) to the support element (9).

5. A motor vehicle body according to at least one of the preceding claims, **characterized in that** the support element (9) is glued and screwed together with the frame (7) or is glued and welded together with the same.

## Revendications

1. Carrosserie de véhicule à moteur (4) pour un véhicule à moteur avec une partie de carrosserie latérale (5) s'étendant dans le sens longitudinal du véhicule et avec une bride (6) dépassant de la partie de carrosserie latérale (5) et prévue pour la fixation d'une partie de renfort d'un toit (1), avec un canal de toiture (2) s'étendant latéralement dans le sens de la marche, avec une tôle extérieure (10) recouvrant la partie de carrosserie latérale (5) et avec une tôle extérieure (12) du toit (1), les tôles extérieures (10, 12) étant amenées jusqu'au canal de toit (2) et s'appuyant dans le fond du canal de toit (2) sur la bride (6) de la partie de carrosserie latérale (5), et avec un cadre (7) pour un toit coulissant (3) du véhicule à moteur, le cadre (7) pour le toit coulissant (3) étant fixé sur la bride (6) de la partie de carrosserie latérale (5) et distant du canal de toit (2) et la tôle extérieure (12) du toit (1) possédant un évidement (13) pour le toit coulissant (3) et le cadre (7) présentant une bride (19) pour la fixation sur la bride (6) de la partie de carrosserie latérale (5) et une bride (20) pour la fixation du toit coulissant (3) et le cadre (7) possédant un élément d'appui (9) guidé sur la partie de la tôle extérieure (12) du toit (1) orientée vers le toit coulissant (3), **caractérisée en ce que** le cadre (7) présente dans une partie centrale une partie (14) amenée jusqu'à la tôle extérieure (12) du toit (1), sur laquelle la tôle extérieure (12) du toit (1) repose, la partie (14) amenée jusqu'à la tôle extérieure (12) du toit (1) étant disposée entre les deux brides (19, 20) du cadre (7).

2. Carrosserie de véhicule à moteur selon la revendication 1, **caractérisée en ce que** la partie (14) du cadre (7) amenée jusqu'à la tôle extérieure (12) du toit (1) présente un renfoncement (15) en forme de cuvette destiné à recevoir un bourrelet d'adhésif (16) reliant la tôle extérieure (12) du toit (1) au cadre (7).

3. Carrosserie de véhicule à moteur selon la revendication 1 ou 2, **caractérisée en ce que** l'élément d'appui (9) est fixé sur la bride (20) du cadre (7) prévue pour la liaison du toit coulissant (3).

4. Carrosserie de véhicule à moteur selon l'une au moins des revendications précédentes, **caractérisée en ce que** l'élément d'appui (9) présente un renfoncement (17) en forme de cuvette destiné à recevoir un bourrelet d'adhésif (18) reliant la tôle extérieure (12) du toit (1) à l'élément d'appui (9).

5. Carrosserie de véhicule à moteur selon l'une au moins des revendications précédentes, **caractérisée en ce que** l'élément d'appui (9) est collé et vissé ou collé et soudé au cadre (7).
